(19) **Europäisches Patentamt**
**European Patent Office**
**Office européen des brevets**

(11) **EP 3 999 296 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **20749802.3**

(22) Anmeldetag: **19.07.2020**

(51) Internationale Patentklassifikation (IPC):
**B29B 7/42** *(2006.01)* **B29B 7/48** *(2006.01)*
**B29B 7/84** *(2006.01)* **B29B 7/86** *(2006.01)*
**B29C 48/425** *(2019.01)* **B29C 48/52** *(2019.01)*
**B29C 48/53** *(2019.01)* **B29C 48/76** *(2019.01)*
**B29B 7/82** *(2006.01)*

(52) Gemeinsame Patentklassifikation (CPC):
**B29B 7/845; B29B 7/421; B29B 7/428;**
**B29B 7/429; B29B 7/482; B29B 7/489; B29B 7/86;**
**B29C 48/425; B29C 48/52; B29C 48/53;**
**B29C 48/767;** B29B 7/485; B29B 7/826

(86) Internationale Anmeldenummer:
**PCT/DE2020/100631**

(87) Internationale Veröffentlichungsnummer:
**WO 2021/008660 (21.01.2021 Gazette 2021/03)**

(54) **EXTRUDER ZUR VISKOSITÄTSERHÖHENDEN AUFBEREITUNG VON AUFSCHMELZBAREN POLYMEREN**

EXTRUDER FOR THE VISCOSITY-INCREASING PREPARATION OF MELTABLE POLYMERS

EXTRUDEUSE CONÇUE POUR PRÉPARER DES POLYMÈRES FUSIBLES DE MANIÈRE À ACCROÎTRE LEUR VISCOSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2019 DE 102019119528**
**10.10.2019 DE 102019127393**

(43) Veröffentlichungstag der Anmeldung:
**25.05.2022 Patentblatt 2022/21**

(73) Patentinhaber: Gneuss GmbH
**32549 Bad Oeynhausen (DE)**

(72) Erfinder:
• **GNEUSS, Daniel**
**Charlotte, NC, 28277 (US)**

• **GNEUSS, Detlef**
**6919 Carabietta (CH)**
• **GNEUSS, Stephan**
**32547 Bad Oeynhausen (DE)**

(74) Vertreter: **Tarvenkorn, Oliver**
**Tarvenkorn & Wickord Patentanwälte**
**Partnerschaftsgesellschaft mbB**
**Bernhard-Ernst-Straße 12**
**48155 Münster (DE)**

(56) Entgegenhaltungen:
**EP-A1- 0 588 008 EP-B1- 1 434 680**
**EP-B1- 3 221 120 WO-A1-2020/108705**
**DE-A1-102017 111 275 DE-A1-102018 128 884**
**DE-B3-102013 003 380**

**Beschreibung**

Die Erfindung betrifft einen Extruder zur viskositätserhöhenden Aufbereitung von aufschmelzbaren Polymeren mit den Merkmalen des Oberbegriffs des Anspruchs 1.

In der Kunststofftechnik werden Extruder zur Plastifizierung und zur Aufbereitung von Polymeren benutzt. Sofern das Ziel die bloße Plastifizierung ist, stehen viele Bauarten als Monorotor mit einer Extruderschnecke oder als Doppelrotor mit zwei Extruderschnecken zur Verfügung, wobei die besondere Geometrie der Extruderschnecken jeweils dazu führt, dass an einem Ende Kunststoff in Form fester Partikel eingezogen wird, dieser im Verlauf der Schnecke aufgeschmolzen und am Ende flüssig ausgestoßen wird. In vielen Anwendungsfällen wird auch eine Homogenisierung und Entgasung vorgenommen, um z. B. in den Feststoffen enthaltene Feuchtigkeit abzuführen. Nachteilig ist dabei oftmals, dass die starke Scherung der Schmelze im Extruder zur Reduzierung der Molekülkettenlängen des Polymers und damit zur Herabsetzung von dessen Viskosität führt. Diese Effekte treten insbesondere bei hochviskosen Polymeren mit entsprechend langen Molekülstrukturen auf, die anfällig für mechanische Einflüsse sind. Für bestimmte Anwendungsfälle darf die Viskosität während der Plastifizierung im Extruder jedoch nicht zu stark sinken, sofern für den Weiterverarbeitungsprozess eine bestimmte Viskosität des geschmolzenen Polymers erforderlich ist. Dies gilt beispielsweise für das Recycling von hydrolysierbaren Polykondensaten wie Polyester (PET) und dabei insbesondere im Zusammenhang mit anspruchsvollen Weiterverarbeitungsprozessen wie der Herstellung von textilen Kunststofffasern.

Für die Plastifizierung und vor allem für die Aufbereitung von bestimmten Polymeren mit gleichzeitiger Erhöhung der Viskosität ist aus der EP 1 434 680 B1, der DE 10 2013 003 380 B3 und der WO 2020/108705 A1 (Stand der Technik unter Art. 54 (3) EPÜ) jeweils ein Extruder mit einem Multi-Rotationssystem bekannt. Diese sogenannten MRS-Extruder weisen jeweilst eine Extruderschnecke mit einem Mehrschneckenextruderteil auf, bei dem mehrere angetriebene Satellitenschnecken um die Hauptschnecke herum angeordnet sind. Diese rotieren mit der Extruderschnecke als Einheit und rotieren dabei zugleich um ihre eigene Achse. In dem Mehrschneckenextruderteil kommt es zu einer starken Durchmischung und Vergrößerung der Oberfläche, so dass eine in diesem Bereich am Extrudergehäuse angeordnete Gasabsaugung besonders effektiv ist. Aufgrund der Absaugung eines Großteils der im Polymer enthaltenen Feuchtigkeit kann bei Polykondensaten eine deutliche Kettenverlängerung und damit eine Erhöhung der intrinsischen Viskosität erreicht werden. Da zugleich Fremdstoffe abgeschieden werden, eignet sich ein MRS-Extruder insbesondere für das Recycling von Polyester (PET) und ermöglicht, im Durchlaufbetrieb direkt aus Recyclingware hochreines PET zu erhalten, das ohne weitere Nachbehandlung für neue Getränke- und Lebensmittelverpackungen einsetzbar ist.

Das grundsätzlich bewährte Prinzip der beschriebenen Aufbereitung von PET im MRS-Extruder erfordert jedoch ein sehr großes Vakuum, also einen sehr geringen Restdruck im Bereich der Entgasungszone von vorzugsweise kleiner als 5 mbar, damit die flüchtigen Bestandteile nahezu vollständig eliminiert werden können und entsprechend die Molekülkettenverlängerung des Polyesters maximiert werden kann. Für die Erzeugung eines so niedrigen Vakuums kommen nur bestimmte Arten von Vakuumpumpen in Frage. Ein Zielkonflikt besteht außerdem darin, dass große Volumina gas- oder dampfförmiger Bestandteile abgesaugt werden müssen, was große Entlüftungsquerschnitte erfordert, andererseits jedoch ein Hochvakuum wesentlich einfacher und kostengünstiger in kleinen Leitungsquerschnitten erzielbar ist. Hier ist also stets eine Abwägung zwischen optimalen Werkstoffeigenschaften infolge der Aufbereitung und einer wirtschaftlichen Betriebsweise mit Bezug auf die Absaugeinrichtungen erforderlich. Ein weiteres Problem besteht darin, dass Hochvakuum-Absaugeinrichtungen und die zugehörigen Leitungen anfälliger für Verklebungen durch Kondensate und Sublimate sind, die sich aus den abgesaugten Reststoffen abscheiden. Dies gilt gerade für hochverschmutzte PET-Reststoffe wie Bottle Flakes, die nicht nur Feuchtigkeit enthalten, sondern z. B. Klebstoffreste von Etiketten und dergleichen.

Die EP 0 588 008 A1 beschreibt einen Entgasungsextruder, der als Planetwalzenextruder aufgebaut ist. Die Entgasung soll hier allerdings nicht nur Verwirbelung und Oberflächenvergrößerung der Kunststoffschmelze an einer Vakuumabsaugöffnung erreicht werden, sondern soll auf den als Dünnschichtwellen bezeichneten Planetenwellen ausgestrichen werden.

Die Aufgabe der Erfindung besteht somit darin, eine Aufbereitung von Polymerschmelze, insbesondere von PET, im Hochvakuum unter Benutzung wirtschaftlich zu betreibender Vakuumeinrichtungen zu ermöglichen.

Diese Aufgabe wird durch einen Extruder mit den Merkmalen des Anspruchs 1 gelöst; weitere bevorzugte Ausführungen werden in den abhängigen Ansprüchen beansprucht.

Überraschenderweise führt ein Konzept zum Erfolg, das den für die PET-Aufbereitung bewährten MRS-Extruder weiterentwickelt, indem zwei Entgasungszonen vorgesehen werden, die getrennt voneinander ausgebildet sind und mit separaten Absaugeinrichtungen getrennt voneinander betrieben werden.

Zunächst basiert die Lösung der Erfindung auf einem bekannten MRS-Extruder mit mehreren Satellitenschnecken. Diese sind drehbar an der Außenseite der Extruderschnecke gelagert und besitzen eine Verzahnung, welche in eine Innenverzahnung der Gehäusebohrung eingreift. Dadurch ergibt sich eine von der Drehzahl der angetriebenen Extruderschneckenwelle abweichende, nämlich bei den üblichen geometrischen Verhältnissen deutlich erhöhte Drehzahl der Satellitenschnecken. Die erhöhte Drehzahl ist auch im Konzept der Erfindung wichtig, weil damit eine starke Auflockerung der durch den Wirkungsbereich der Satellitenschnecken geführten Schmelze erzielt wird, die wiederum die Entgasung begünstigt.

Zur Erhöhung der Umfangsgeschwindigkeit im Bereich der Vakuumabsaugung ist nach der Erfindung eine partielle Durchmesservergrößerung der Extruderschnecke in einer Entgasungszone vorgesehen. Die mit dem erfindungsgemäßen Extruder erzielbare Viskositätserhöhung und eine wirtschaftlichere Betriebsweise sind aber wesentlich darauf zurückzuführen, dass die Entgasungsmöglichkeiten verdoppelt sind.

Die eine Entgasungszone ist in üblicher Weise im Bereich des Satzes rotierender Satellitenschnecken angeordnet. Die Satellitenschnecken bewirken eine ganz wesentliche Oberflächenvergrößerung des durch diesen Extruderabschnitt geförderten Polymers, so dass zuvor eingeschlossene flüchtige Bestandteile durch mechanische Einwirkung freigesetzt werden und abgesaugt werden können. Diese Entgasungszone befindet sich in Fließrichtung hinter einer weiteren Entgasungszone, welche die Erfindung zusätzlich vorsieht.

Erfindungswesentlich ist diese vorgeschaltete Entgasungszone, die als Vorentgasungszone fungiert und bereits den Großteil an Wasser und anderen flüchtigen Bestandteilen absaugt, so dass nur noch Reste der absaugbaren Substanzen überhaupt bis in die zweite Entgasungszone, also quasi in eine Nach-Entgasungszone, gelangen. Dadurch kann in der zweiten Entgasungszone ein hohes Vakuum wirksam werden, was die Qualität des aufbereiteten Polymers verbessert. Zugleich kann das Hochvakuum wirtschaftlich eingesetzt werden, weil damit nur noch kleine Volumina abgesaugt werden müssen und dementsprechend die Auslegung und der Betrieb der Absaugeinrichtung kostengünstiger möglich sind. Als Hochvakuum für einen Extruder nach der Erfindung gilt ein Druck von kleiner / gleich 5 mbar. Ein solch niedriger Druck kann beispielweise über eine Wälzkolbenpumpe erzeugt werden.

Für die Vorentgasung hingegen reicht eine einfache Absaugeinrichtung wie beispielsweise eine Wasserringpumpe, die zur Vorentgasung in dem erfindungsgemäßen Extruder mit einem Druck von weniger als ca. 10 - 100 mbar betrieben wird und dabei größere Volumina absaugen kann. Ein Hochvakuum ist an dieser Stelle nicht erforderlich.

Der Restdruck sollte in der Vorentgasungszone mindestens um den Faktor 5 größer sein als der Restdruck in der Nach-Entgasungszone. Dieses Verhältnis hat sich als vorteilhaft für eine wirtschaftliche Betriebsweise ergeben.

Um die beschriebenen Effekte von Vor- und Nach-Entgasung zu unterstützen ist die Extruderschneckenwelle so gestaltet, dass in der ersten Entgasungszone eine spontane Verdampfung der meisten flüchtigen Bestandteile wie insbesondere Wasser erfolgt und diese Stoffe schon allein durch den Dampfdruck aus der Entgasungszone entweichen können. Dazu trägt die nachfolgend beschriebene Geometrie der Extruderschneckenwelle wesentlich bei. Die Erfindung beruht also auf wesentlich mehr als nur einer zweiten Absaugeinrichtung, die ans Gehäuse anzuschließen ist.

Wichtig ist eine weitgehend gasdichte Trennung der beiden benachbarten Entgasungszonen. Das ist nur infolge einer besonderen Geometrie der Extruderschneckenwelle möglich. Diese besitzt nämlich in den Entgasungszonen jeweils tief eingeschnittene Schneckengänge zwischen den Schneckenstegen. Das heißt, bei unverändertem Außendurchmesser des Schneckenstegs ist dort der Durchmesser des Extruderschneckenwellenkerns reduziert. Der Schneckensteg besitzt also eine zylindrische Hüllkurve, die durchgängig über alle Entgasungszonen auf den Durchmesser der Gehäusebohrung abgestimmt ist. Während der Außendurchmesser der Extruderschneckenwelle konstant ist, variiert allerdings der Innendurchmesser.

Zwischen den Entgasungszonen ist eine Kompressions- und Dichtzone ausgebildet, die im Vergleich zu den Entgasungszonen deutlich kürzer sein kann. An dieser Stelle ist der Durchmesser des Extruderschneckenwellenkerns deutlich größer - immer noch bei konstantem Außendurchmesser des Schneckenstegs - so dass die Gangtiefe der Hauptschnecke dort reduziert ist. Sie ist soweit reduziert, dass es zu einer Kompression der geförderten Polymerschmelze kommt. Die Kompression wiederum führt zu einem Selbstdichtungseffekt, das heißt, im laufenden Betrieb, wenn der vorgesehene Volumenstrom gefördert wird, bildet die flüssige Schmelze selber einen geschlossenen Dichtring aus flüssiger Polymerschmelze zwischen Durchmesser des Extruderschneckenwellenkerns und der Innenwandung des Gehäuses aus. Da aus der Schmelze, die diese Stelle passiert, bereits ein Großteil der flüchtigen Bestandteile entwichen bzw. abgesaugt worden ist, ist auch die Viskosität der Schmelze in der Dichtzone gegenüber dem Einlaufbereich schon wieder erhöht, wodurch eine gute Dichtwirkung gegeben ist.

Jedenfalls wird ein Aufbereitungsverfahren unter Nutzung des Extruders nach der Erfindung so betrieben, dass die Schmelze in der Dichtzone eine solche Viskosität besitzt, dass sie von keiner der beiden Absaugeinrichtungen, die mit den beidseits angrenzenden Entgasungszonen verbunden sind, aus der Dichtzone herausgesaugt werden kann.

Um auf die Geometrie der Extruderschnecke Bezug nehmen zu können, werden die Durchmesser wie folgt bezeichnet:

- D1 in einer Einzugs-/Meteringzone
- D3 in einer Austragszone und
- D2 in dem dazwischen liegenden Bereich, die auch als Mittelzone bezeichnet ist, in welcher die Entgasungszonen angeordnet ist.

Der Außendurchmesser D2 der Extruderschnecke, der durch die Außenkante des Extruderschneckenstegs auf der Extruderschneckenwelle definiert ist, ist gegenüber der vorhergehenden Einzugs- und Meteringzone wie auch der sich anschließenden Austragszone deutlich erhöht und beträgt mindestens das 1,2fache bis 2,0fache des dortigen Durchmessers D1. Er ist über die Länge bevorzugt weitgehend konstant, so dass sich eine zylindrische Hüllkurve ergibt. Damit kann die zugehörige Bohrung im Gehäuse einfach hergestellt werden und geringe axiale Verschiebungen zwischen Extruderschnecke und Gehäuse sind möglich. Lediglich in den Übergangsbereichen zu den Abschnitten der Extruderschnecke vor und nach der Mittelzone ergibt sich bevorzugt eine Kegelform.

Der Außendurchmesser des Wellenkerns der Extruderschnecke hingegen variiert in den beiden Entgasungszonen stark: während er in einem stromaufwärts liegenden Anfangsbereich ebenfalls groß ist, wodurch sich eine geringe Gangtiefe zwischen den parallelen Abschnitten des Extruderschneckenstegs ergibt, ist er im anschließenden Entgasungsbereich deutlich kleiner, so dass sich tiefe Schneckengänge ergeben.

Die Absaugöffnungen im Gehäuse befinden sich jeweils dort, wo die Gangtiefe groß ist. Sie können sich bis zu dem Durchmessersprung des Wellenkerns zwischen Anfangs- und Endbereich erstrecken.

Die bereits im ersten Teil der Extruderschnecke plastifizierte Schmelze wird im Anfangsbereich der ersten Entgasungszone stark komprimiert, da dort das freie Volumen in den zwischen Schneckensteg, Wellenkern und Gehäusebohrung gebildeten Schneckengängen gering ist.

Im Endbereich der ersten Entgasungszone ist das Volumen aber sehr viel größer und kann durch die herangeführte Schmelze nicht annähernd ausgefüllt werden. Am Durchmessersprung des Wellenkerns findet daher eine schlagartige Expansion der Schmelze in das freie Volumen statt. Der Schmelzestrom reißt auf und führt zu einer erheblichen Oberflächenvergrößerung der Schmelze, welche die Absaugung der flüchtigen Stoffe aus der Schmelze ermöglicht. In der ersten Entgasungszone, in der die Schmelze noch mit allen flüchtigen Stoffen befrachtet ist, verdampft z. B. das enthaltene Wasser schlagartig.

Danach erfolgt eine erneute Kompression. Noch in der Schmelze eingeschlossene Gastbestandteile werden an dieser Stelle aus der Schmelze herausgedrückt, so dass es günstig ist, die erste Entgasungszone bis an den Dicht- und Kompressionsabschnitt heranzuführen.

In der zweiten Entgasungszone wird die Oberflächenvergrößerung einerseits durch die beschriebene Geometrie der Schnecke und andererseits durch die rotierenden Satellitenschneckenwellen bewirkt, so dass auch die nach Durchlaufen der ersten Entgasungszone verbliebenen Stoffe freigesetzt werden.

Wird der Durchmesser D2 > 1,5 x D1 gewählt, so wird gewährleistet, dass in der durch den Entgasungsanschluss gebildeten Vakuumkammer des Extruders eine noch großflächigere Wechselwirkung zwischen Schmelze und Vakuum erreicht wird.

Zweckmäßig ist, dass die Länge der Schnecke in der Entgasungszone 2 x D2 ist. Damit ergibt sich eine möglichst große Fläche, die über den Entgasungsanschluss entgast werden kann.

Wenn z.B. die Steigung des Schneckenstegs im Eingangsbereich und in der Entgasungszone im Wesentlichen gleich groß sind, ist es von Vorteil, wenn in der Entgasungszone der Schnecke zwischen dem Schneckensteg mindestens einen weiteren Schneckensteg mit im Wesentlichen gleicher Steigung vorgesehen ist.

Durch die Durchmesservergrößerung im Endbereich der Entgasungszone des Extruders würde der Schneckensteg bei gleicher Steigung wie in der Einzugs- und Meteringzone erheblich weiter auseinander liegen als in der Einzugs-/Meteringzone bzw. Austragszone der Schnecke. Durch das Vorsehen mindestens eines zweiten Schneckenstegs bzw. mehrerer Schneckenstege, der/die zwischen dem ersten Schneckensteg angeordnet ist/sind, ergeben sich auf die Länge der Schnecke in der Entgasungszone mehr Scher-Stellen zwischen dem Gehäuse den Wendeln, die Walkarbeit und Vorschubarbeit leisten können, so dass die Oberfläche der Schmelze in der Entgasungszone noch weiter vergrößert wird.

Es besteht aber auch die Möglichkeit, dass z.B. die Steigung der Schnecke in der Einzugs-/Meteringzone und in der Austragszone im Wesentlichen gleich groß ist, dass aber die Steigung der Schneckenwendel in der Entgasungszone größer ist als dort.

Dadurch wächst der Schneckensteg in der Entgasungszone des Extruders näher zusammen. Auch dadurch kann erreicht werden, dass mehr Walkarbeit und Vortriebsarbeit in die Schmelze eingebracht werden kann, wodurch sich die Oberfläche der Schmelze, die mit dem Vakuum in Kontakt kommt, vergrö-ßert.

Vorteilhaft ist, wenn die Gangtiefe des Schneckenstegs in der Entgasungszone mindestens 10% des Durchmessers D2 der Extruderschnecke in der Entgasungszone beträgt.

Insbesondere sollte die Gangtiefe h in der Vor-Entgasungszone nach folgender Beziehung abgestimmt werden:

$$h\left(Vorentgasung\right) = Z \cdot \frac{D1}{D2^2} \cdot \frac{t(Einzugszone)}{t(Vorentgasung)} \cdot h(Einzugszone)$$

wobei D1, D2 die oben definierten Durchmesser, h die Gangtiefen und t die Steigungen in den jeweiligen Abschnitten sind.

Dabei hat sich ein Faktor Z > 8 als vorteilhaft erwiesen, insbesondere Z > 4.

Durch jede dieser Maßnahmen wird erreicht, dass die zwischen den Schneckenstegen auf der Außenseite der Extruderschneckenwelle gebildeten Schneckengänge im Betrieb des Extruders nicht voll mit Schmelze gefüllt werden. Die Schmelze hat an der Flanke der Schneckenstege die größte Höhe und fällt in der Gangmitte zum Grund hin ab, und/oder die Schmelze kann sich über eine größere Länge verteilen. Hinzu kommt, dass durch die Bewegung der Extruderschneckenwelle die Schmelze im Schneckengang zudem durchgewalkt werden kann. Auch diese Maßnahmen dienen dazu, dass in gleicher Zeit eine größere Schmelzeoberfläche mit dem Unterdruck, der an den Entgasungsanschlüssen herrscht, in Kontakt kommt, und somit die Schmelze besser entgast werden kann.

Vorteilhaft kann sein, wenn der Extruder im Übergang von der Meteringzone zur Entgasungszone eine einstellbare Drossel bzw. einen einstellbaren Stauring aufweist, über welchen der Scherspalt justiert werden kann. Dadurch kann einerseits sichergestellt werden, dass nur einwandfrei plastifizierte Schmelze in die Entgasungszone gelangt. Andererseits wird eine gewisse Abdichtung erreicht, die gewährleistet, dass es zu keinem Kurzschluss für den Unterdruck zum Eingangsbereich kommen kann.

Hinzu kommt durch die besondere Geometrie das Prinzip einer Expansionsdüse, welche bei der Erfindung durch den sich in beiden Entgasungszonen schlagartig reduzierenden Kerndurchmesser bei gleichem Stegaußendurchmesser und konstantem Innendurchmesser der Gehäusebohrung bewirkt wird.

Das erfindungsgemäße Prinzip der Expansionsdüse in den Entgasungszonen zieht neben den beschriebenen mechanischen Einflüssen auf die Schmelze auch einen Temperatureinfluss, nämlich eine Abkühlung, nach sich. Die sich einstellende Abkühlung kann bei dem erfindungsgemäßen Extruder als zusätzlicher Effekt in verschiedener Weise genutzt werden.

Während beim MRS-Extruder im Stand der Technik fast immer eine innere Kühlung der Extruderschneckenwelle in der Entgasungszone notwendig ist, um den enormen Wärmeeintrag infolge mechanischer Scherung zu kompensieren, kann nach der Erfindung zumindest für den Endbereich der zweiten Entgasungszone darauf verzichtet werden. Damit wird die für die gesamte Extruderschnecke notwendige Kühlleistung zumindest reduziert.

Unter Umständen ist die Abkühlung so stark, dass die Schmelze partiell einfrieren kann. Um dem entgegenzuwirken, kann eine Beheizung des Endbereichs der Entgasungszone vorgesehen sein. Dazu kann zum Beispiel das Gehäuse mit Heizbändern beheizt werden.

Da andererseits auch bei dem erfindungsgemäßen Extruder immer noch ein starker Wärmeeintrag durch Scherung in der Einzugs- und Meteringzone gegeben ist, bietet es sich an, auf eine externe Temperierung der Extruderschnecke zu verzichten und stattdessen ein Fluid zur Temperierung durch innere Kanäle der Schnecke umlaufen zu lassen, wozu nur eine externe Pumpe vorgesehen ist, jedoch kein externer Wärmetauscher. Das Fluid wird am Wellenende in eine innere Schneckenbohrung eingeleitet, erwärmt sich in der Einzugs- und Meteringzone, evtl. auch noch im Anfangsbereich der Entgasungszone und gibt dann die Wärme im Endbereich an die in den tiefen Schneckengängen geführte, abgekühlte Schmelze ab. Die Ausleitung erfolgt am anderen Ende der Extruderschneckenwelle. Der Rücklauf zur Pumpe erfolgt extern.

Von Vorteil ist dazu, wenn die Schnecke Temperierkanäle aufweist, die insbesondere in der Entgasungszone z.B. in Form von peripheren Kanälen oder als konzentrischer Kanal, eine schnell wirkende, präzise Einstellung der Oberflächentemperatur der Schnecke gewährleisten. Selbst die Schneckenstege lassen sich als Kanäle ausbilden.

Die Erfindung wird nachfolgend mit Bezug auf das in den Zeichnungen dargestellte Ausführungsbeispiel eines Extruders näher erläutert. Die Figuren zeigen im Einzelnen:

Fig. 1 einen Extruder in perspektivischer Ansicht von außen;

Fig. 2A, 2B jeweils Teile einer Extruderschnecke in perspektivischer Ansicht;

Fig. 3 ein Detail der Extruderschnecke in Seitenansicht;

Fig. 4 ein Detail des Extruders in perspektivischer Ansicht;

Fig. 5 ein Detail des Extruders in seitlicher, teilweise geschnittener Ansicht und

Fig. 6 eine schematische Schnittdarstellung des Extruders nach den Figuren 1 bis 5;

Fig. 7 eine schematische Schnittdarstellung eines Extruders nach einer weiteren Ausführungsform.

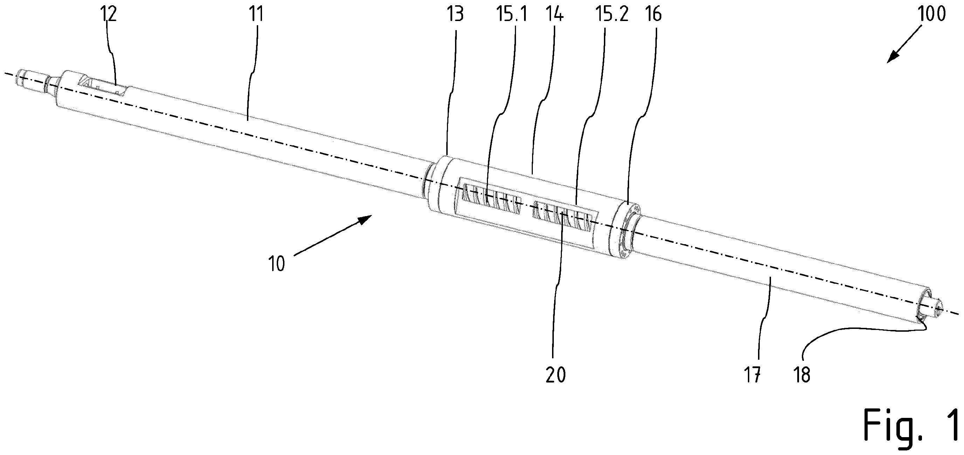

In Figur 1 ist ein Extruder 100 nach der Erfindung in perspektivischer Ansicht von außen dargestellt, wobei endseitige Lager- und Antriebselemente nicht dargestellt sind. Sichtbar ist insbesondere das Gehäuse 10 mit einer inneren Gehäusebohrung 18 in Form einer Bohrung, in der eine Extruderschnecke 20 rotierbar gelagert ist. Das Gehäuse 10 besitzt einen Eingangsbereich 11 mit einer Einzugsöffnung 12 für feste Polymerpartikel. Über einen Verbindungsflansch 13 schließt sich ein Zwischenbereich 14 mit erweitertem Durchmesser an, der zwei Gehäuseöffnungen 15.1, 15.2 aufweist, die sich jeweils bis in die innenliegende Gehäusebohrung 18 erstrecken. An den Gehäuseöffnungen15.1, 15.2 wird jeweils eine Absaugeinrichtung angeschlossen, insbesondere eine Vakuumpumpe.

Über einen weiteren Verbindungsflansch 16 schließt sich ein Endbereich 17 des Gehäuses 10 an, dessen Durchmesser wiederum reduziert ist und der in etwa dem des Anfangsbereiches 11 entspricht. Am Ende des Endbereichs 17 öffnet sich die Gehäuseausnehmung, so dass von dieser Stelle aus die aufbereitete Polymerschmelze zur weiteren Verarbeitung abgeleitet werden kann.

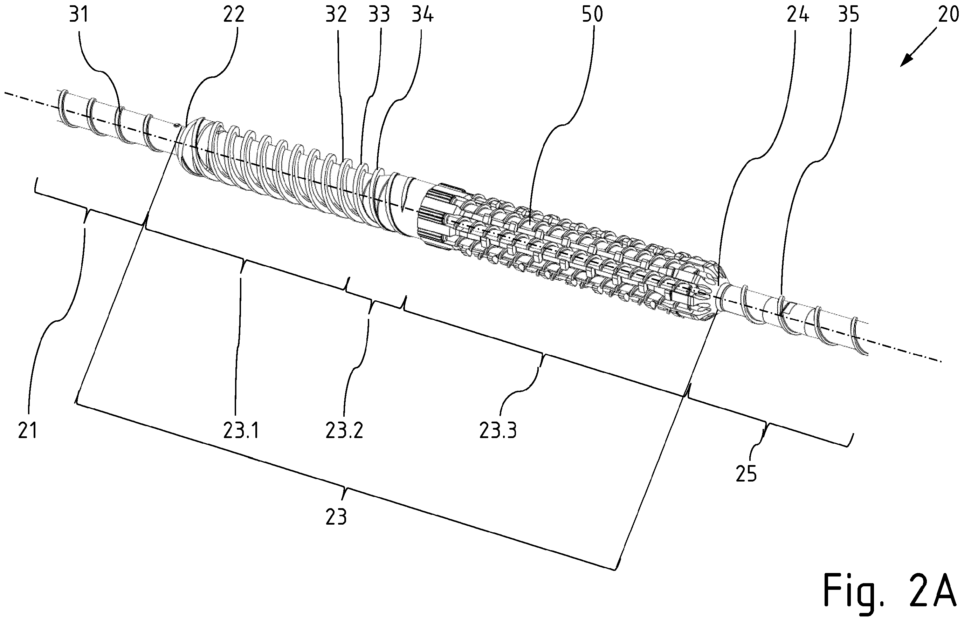

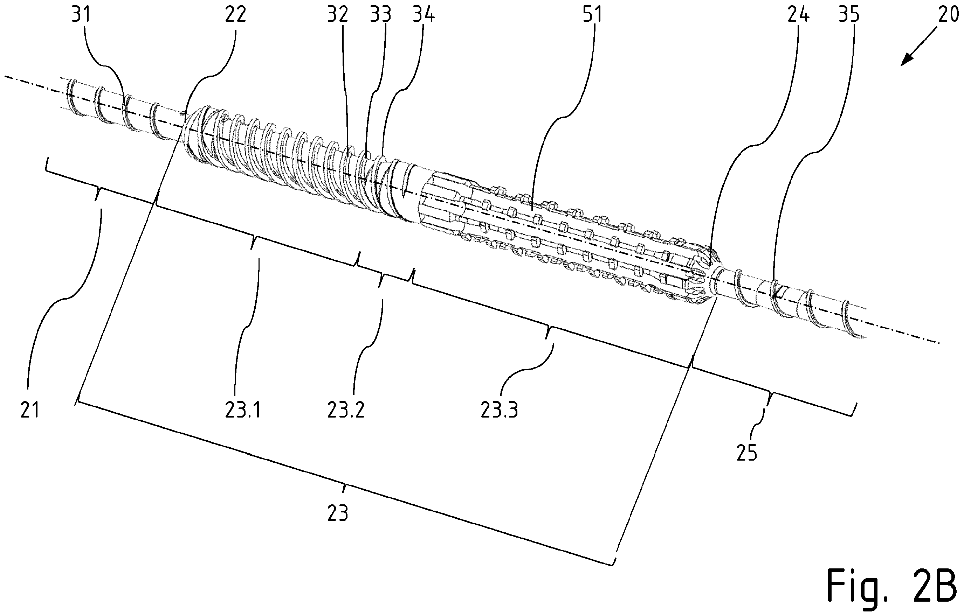

Figuren 2A und 2B zeigen jeweils aus derselben perspektivischen Ansicht Teile der Extruderschnecke 20. In Fig. 2A ist die Extruderschnecke 20 mit ihren Satellitenschnecken 50 dargestellt. In Fig. 2B sind nur deren Aufnahmenuten 51 sichtbar, damit der Blick auf die Geometrie der Extruderschnecke 20 frei bleibt.

Eine Einzugs- und Meteringzone 21 besitzt einen wendelförmigen Extruderschneckensteg 31. Die Extruderschnecke 20 hat außerdem eine Austragszone 25 mit gleichem oder ähnlichem Durchmesser wie die Einzugs- und Meteringzone 21 und besitzt ebenfalls nur einen Extruderschneckensteg 35.

Dazwischen befindet sich eine Entgasungszone 23, die sich wiederum in eine erste Vor-Entgasungszone 23.1, einen Dicht- und Kompressionsbereich 23.2 und eine Nach-Entgasungszone 23.3 unterteilt. In der Entgasungszone 23 ist der Schneckenwellenkern, dessen Durchmesser über die Länge variiert, von insgesamt drei ineinander verschlungenen Extruderschneckenstegen 32, 33, 34 umgeben.

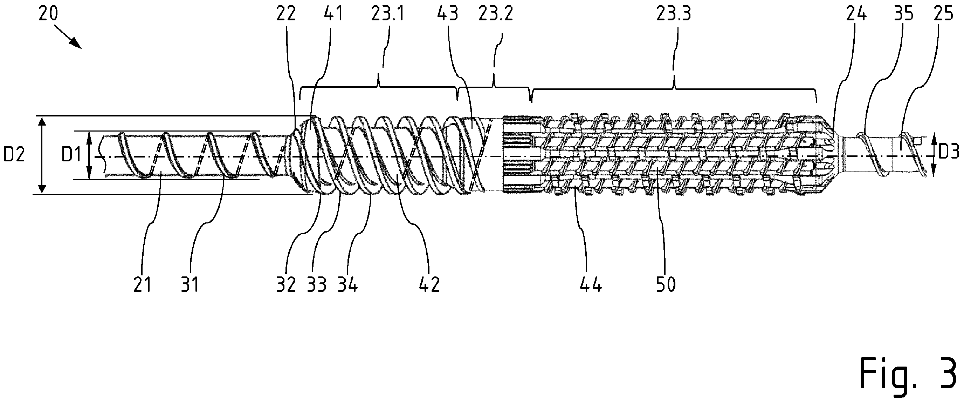

In Figur 3 ist der erfindungswesentliche Abschnitt der Extruderschnecke 20 in einer vergrößerten, seitlichen Ansicht dargestellt, wobei auch die jeweiligen Außendurchmesser D1, D2, D3 bezeichnet sind. Beispielhaft sind die Abmaße und geometrischen Relationen wie folgt:

- In der Einzugs- und Meteringzone 21 weist der Extruderschneckensteg 31 einen relativ kleinen Außendurchmesser D1 von beispielsweise 110 mm auf.
- In der Austragszone 25 weist der Extruderschneckensteg 35 einen Außendurchmesser D3 auf, welcher dem 0,8 bis 1,2fachen des Außendurchmessers D1 entspricht, also in etwa D1 entspricht, aber 20% grö-ßer oder kleiner sein kann;
- In der Entgasungszone 23 weisen die Extruderschneckenstege 32, 33, 34 einen einheitlichen Außendurchmesser D2 auf, der wenigstens dem 1,5fachen von D1 entspricht, insbesondere sogar doppelt so groß ist. Im Beispiel ist D2 = 190 mm.

Die Außendurchmesser D1, D2 und D3 variieren also nur zwischen den Zonen, sind innerhalb der jeweiligen Zone 21.2, 23, 25 aber jeweils konstant. Dazwischen sind kegelförmige Übergangszonen 22, 24 ausgebildet.

Der Wellenkerndurchmesser ist sowohl in der Einzugs- und Meteringzone 21 wie in der Austragszone 25 weitgehend konstant. Kleine Variationen des Wellenkerndurchmessers und/oder der Steigung der Extruderschnecke 20 sind vorgesehen, wie in der Extrusionstechnik üblich, um eine Homogenisierung und Verdichtung zu erreichen und/oder die Fließgeschwindigkeit lokal zu beeinflussen.

Unmittelbar im Übergang von der Entgasungszone 23 zur Austragszone 25 ist der Wellenkerndurchmesser der Austragszone beispielsweise gegenüber dem Durchmesser im weiteren Verlauf reduziert, damit der Schmelzedruck in der Austragszone 25 erneut aufgebaut werden kann, nachdem er in der Nach-Entgasungszone 23.3 aufgrund des dort anliegenden Hochvakuums bei annähernd null lag.

Erfindungswesentlich ist, dass sich der Wellenkerndurchmesser innerhalb der Entgasungszone 23 zweimal schlagartig reduziert. Am Übergang von der Übergangszone 22 in die Vor-Entgasungszone 23 wie auch im darauf folgenden Dichtungs- und Kompressionsabschnitt 23.2 ist der Wellenkerndurchmesser jeweils groß; die Höhe der Extruderschneckenstege 32, 33, 34 und damit die Höhe der dazwischen ausgebildeten Schneckengänge 41, 43 ist relativ dazu gesehen klein.

Zwischen den genannten Stellen ist der Wellenkerndurchmesser jeweils deutlich kleiner, wodurch sich eine größere Gangtiefe zwischen den Schneckenstegen ergibt. Bei dem angeführten Beispiel beträgt die Gangtiefe bei den Schneckengängen 41, 43 beispielsweise 4 mm, entsprechend zwischen 10% und 20% des Außendurchmessers D2. Die Gangtiefe der Schneckengänge 42, 44 in den Entgasungszonen 23.1, 23.3 beträgt im Beispiel 32 mm, so dass sich die Höhe der Schneckengänge 42 dort um den Faktor 3 bis 10 gegenüber den Schneckengängen 41 im Anfangsbereich 23.1 bzw. in dem Dicht- und Kompressionsabschnitt 23.2 vergrößert hat.

Die gestrichelten Doppellinien in Figur 3 dienen dazu, den Verlauf der Extruderschneckenstege über die Länge der Extruderschneckenwelle zu kennzeichnen. In der Einzugs- und Meteringzone 21 und in der Austragszone 25 gibt es jeweils nur einen wendelförmigen Extruderschneckensteg 31, 35. In der Entgasungszone 23 kennzeichnen die gestrichelten Doppellinien den Verlauf eines ersten Extruderschneckenstegs 32. Es ist deutlich zu erkennen, dass diese Linien jeweils zwei weitere Extruderschneckenstege 33, 34 überkreuzen. Damit sind in der Entgasungszone 23 insgesamt drei ineinander verschlungene Extruderschneckenstege 32, 33, 34 ausgebildet.

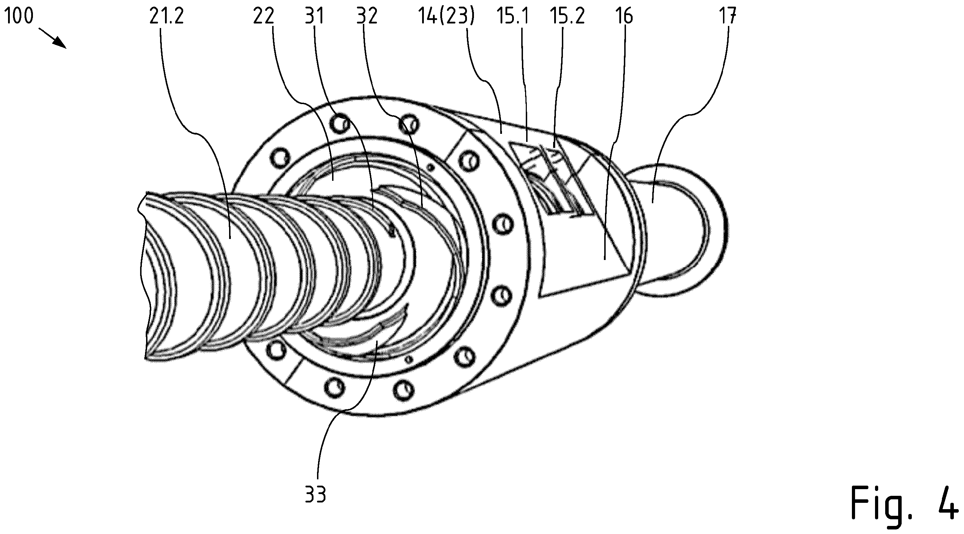

Figur 4 zeigt in einer perspektivischen Ansicht den Übergang von der Einzugs- und Meteringzone 21 in die Entgasungszone 23 innerhalb eines Zwischenbereichs 14 des Gehäuses 10. Dazu sind die Gehäuseteile 11 und 13 (siehe Fig. 1) entfernt, so dass ein freier Blick auf die kegelförmige Übergangszone 22 gegeben ist. Der Extruderschneckensteg 31 der Einzugs- und Meteringzone 21 läuft vor der Übergangszone 22 aus. Bereits innerhalb der Übergangszone 22 haben die drei Extruderschneckenstege 32, 33, 34 der Entgasungszone 23 ihren Anfang, wobei in Figur 4 nur die Anfänge der Extruderschneckenstege 32, 33 sichtbar sind. Durch den Abschluss des Extruderschneckenstegs 31 vor der Übergangszone 22 und den Beginn der drei Extruderschneckenstege 32, 33 und 34 in der Übergangszone 22 wird eine frühzeitige Aufteilung des Schmelzestroms in drei Teilströme erreicht.

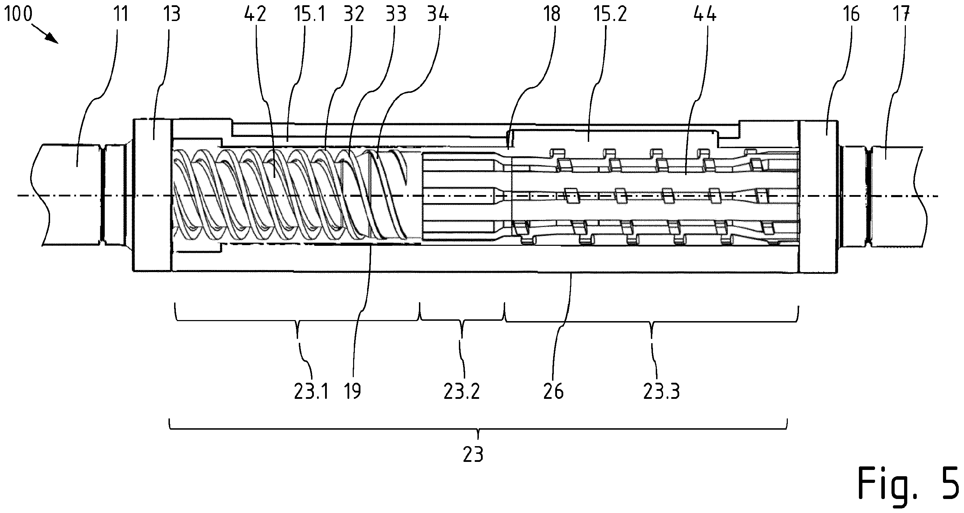

Figur 5 zeigt den erfindungswesentlichen Teil des erfindungsgemäßen Extruders 100 in einer teilweise geschnittenen Ansicht. Hierin ist der Zwischenbereich des Gehäuses 10 geschnitten dargestellt. Es ist erkennbar, dass die Außenkanten aller drei Extruderschneckenstege 32, 33, 34 sehr dicht vor der Innenwandung 19 der Gehäusebohrung 18 enden. Man erkennt in Figur 5 gut den Verlauf des Durchmessers des Extruderwellenkerns, der in der Vor-Entgasungszone 23.1 und dann noch einmal hinter dem Dicht- und Kompressionsbereich 23.2 am Anfang der Nach-Entgasungszone 23.3 stark reduziert ist. Dadurch bilden sich großvolumige, tief eingeschnittene Schneckengänge 42 zwischen der Innenwandung 19, den parallelen Abschnitten der Extruderschneckenstege 32, 33, 34 und dem Extruderwellenkern.

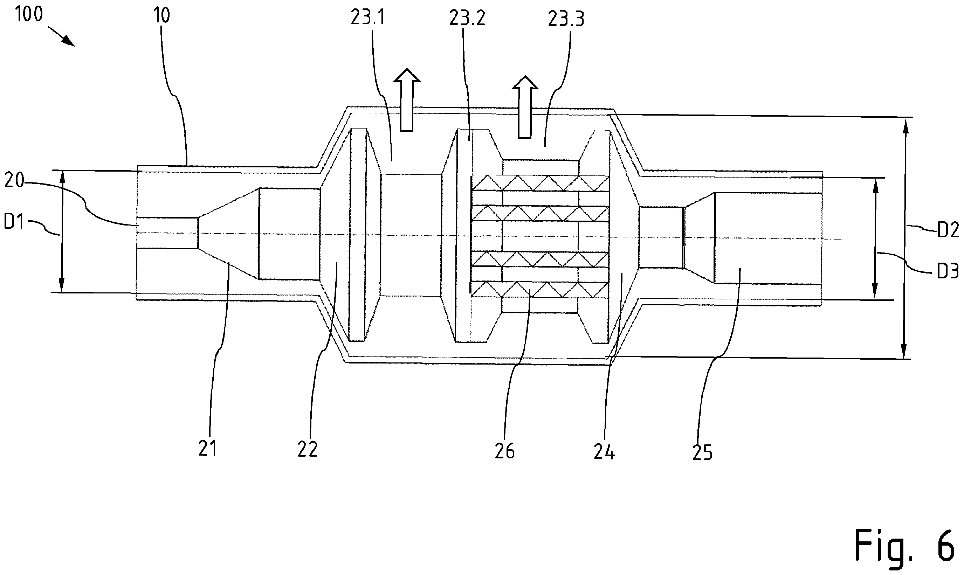

Figur 6 ist eine schematische, stark überzeichnete Darstellung der Größenverhältnisse an der Extruderschnecke 20. Die Fließrichtung verläuft von links nach rechts. Abgebildet sind der Wellenkerndurchmesser und der über die Außenkanten der Stege gemessene Außendurchmesser; die Schneckenstege selbst sind nicht dargestellt. Durch diese Darstellung wird insbesondere die Variation der Gangtiefe zwischen dem Wellenkern und der Innenwandung des Gehäuses 10 über die Länge der Extruderschnecke 20 deutlich.

Zum Ende der Meteringzone 21 steigt der Wellenkerndurchmesser erstmalig an. Der Außendurchmesser D1 bleibt konstant. Dadurch verringert sich die Gangtiefe. Es kommt zu einer Kompression der geförderten Schmelze. In der Übergangszone 22 weitet sich das durchströmbare Volumen auf, weil der Außendurchmesser auf D2 steigt. Dies wird durch eine nochmalige Reduzierung der Gangtiefe in der konischen Übergangszone 22 ausgeglichen. Das Ziel ist, die Schmelze so bis zur Vor-Entgasungszone 23.1 zu fördern, dass die gebildeten Fließkanäle zunächst voll gefüllt sind. Der enge Spalt dort erhöht außerdem die Scherung in der Polymerschmelze.

Am Anfang der Entgasungszone 23 ist der Wellenkerndurchmesser schlagartig deutlich reduziert, wobei der Außendurchmesser D2 der Stege konstant bleibt. Das sich dort plötzlich vergrößernde Volumen des Fließkanals kann von der herangeführten Schmelze nicht mehr gefüllt werden. Es kommt zu einer schlagartigen Expansion der zuvor im Übergangsbereich 22 stark gescherten und damit auch stark erhitzten Schmelze. Bei der Expansion lösen sich infolge des Druckabfalls die enthaltenen flüchtigen Stoffe besonders gut. Die vorangegangene Erhitzung durch Scherung trägt ebenfalls dazu bei. Die flüchtigen Stoffe, und zwar der Großteil der Fracht in der Polymerschmelze, können dadurch bereits über die Absaugöffnung 15.1 aus der Vor-Entgasungszone 23.1 abgesaugt werden, wie durch den Blockpfeil angedeutet.

Danach kommt zu einer Fließkanalverengung in dem Dicht- und Kompressionsbereich 23.2. Dies dient zum einen dazu, die Schmelze wieder gasfrei zu sammeln und homogen zu fördern. Zum anderen soll der Fließkanal über den ganzen Umfang lückenlos gefüllt sein, damit die fließende Schmelze selbst eine Gas-Abdichtung bewirkt und die Entgasungszonen 23.1, 23.3 gasdicht voneinander trennt.

Danach erfolgt erneut eine Expansion in der Schmelze, weil in der Nach-Entgasungszone 23.3 die Fließkanalhöhe durch erneute Reduktion des Wellenkerndurchmessers bei gleichem Außendurchmesser D2 der nicht gezeichneten Schneckenstegen schlagartig zunimmt. Die damit einhergehende Aufwirbelung der Schmelze wird durch die rotierenden Satellitenschnecken 26 in diesem Abschnitt noch verstärkt. In der Nach-Entgasungszone 23.3 wird ein hohes Vakuum angelegt, um nach Durchlaufen der Vor-Entgasungszone 23.1 noch verbliebene flüchtige Verunreinigungen zu entfernen. Damit wird eine hohe Reinheit des behandelten Polymers und die gewünschte Erhöhung der intrinsischen Viskosität erreicht.

Hinter der Nach-Entgasungszone 23.3 verjüngt sich der Fließkanal zur Übergangszone 24 hin. In der Übergangszone 24 haben die Stege und der Wellenkern jeweils einen unterschiedlichen Konuswinkel, wodurch eine Fließkanalvergrößerung bewirkt wird. Zwischen der Übergangszone 24 und dem Beginn der Austragszone 25 ist eine kurze konstante Gangtiefe vorgesehen, bevor sich der Wellenkerndurchmesser wieder vergrößert und die Gangtiefe folglich bei konstantem Außendurchmesser D3 der Extruderschneckenstege reduziert ist.

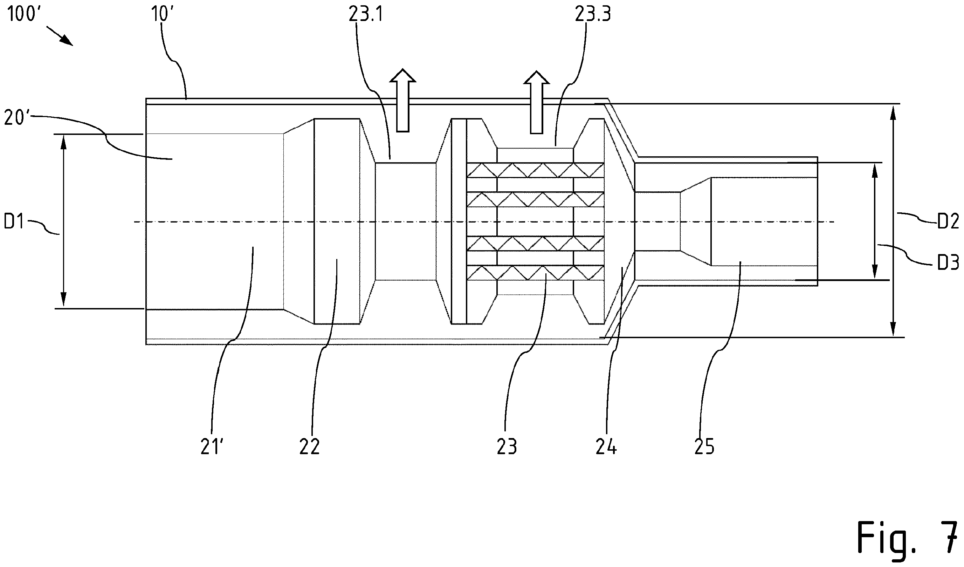

Figur 7 zeigt in einer zu Figur 6 ähnlichen schematischen Ansicht eine weitere Form eines Extruders 100'. Dieser weicht lediglich hinsichtlich der Ausbildung einer Extruderschnecke 20' in einer Einzugszone 21' von der zuvor beschriebenen Ausführungsform ab. Die Entgasungszone 23' mit den Vor- und Nachentgasungszonen 23.1, 23.3 und dem dazwischen befindliche Dicht- und Kompressionsbereich 23.2, der Übergangsbereich 24 und die Austragszone 25 sind genauso ausgebildet wie bei der ersten Ausführungsform.

Die Einzugszone 21' besitzt einen Durchmesser D1', der genauso groß ist wie der Durchmesser D2 in der Entgasungszone 23' und damit deutlich größer ist als der Durchmesser D3 in der Austragszone. Der Fließkanal hat in der Einzugszone 21' eine größere Höhe als im Übergangsbereich 22'. Eine Kompression findet im Übergangsbereich 22' also auch bei dieser Ausführungsform statt, bevor eine starke Expansion in der Vor-Entgasungszone 23.1' erfolgt.

Die unterschiedlich ausgebildete Einzugszone 21' ist zum Beispiel dann vorteilhaft, wenn das Polymer dort nicht als Feststoff eingezogen, aufgeschmolzen und homogenisiert zu werden braucht, sondern bereits in aufgeschmolzener Form aus einem vorgelagerten Prozess übernommen wird.

**Patentansprüche**

1.  Extruder (100; 100') zur viskositätserhöhenden Aufbereitung von aufschmelzbaren Polymeren,

    wenigstens umfassend ein Gehäuse (10; 10') mit einer inneren Gehäuseausnehmung (18), in welcher eine Extruderschnecke (20; 20') mit wenigstens einem schraubenwendelförmigen Extruderschneckensteg (31, 32, 33, 34, 35) rotierbar angeordnet ist,
    welche Extruderschnecke (20; 20') sich hinsichtlich ihres Außendurchmessers in einen Durchmesseranfangs-, Durchmessermittel- und Durchmesserendbereich unterteilt, wobei:

    - der Durchmessermittelbereich einen größeren Außendurchmesser D2 besitzt als wenigstens einer der übrigen Durchmesserbereiche);
    - zwischen Bereichen mit unterschiedlichem Durchmesser D1, D2 oder D3 jeweils ein Übergangskonus (22, 24) ausgebildet ist;
    - im Durchmessermittelbereich wenigstens eine Entgasungszone (23.3) ausgebildet ist, welche eine Gehäuseausnehmung (18) aufweist, von der aus sich wenigstens eine Absaugöffnung (15.2) zu einer Außenseite des Gehäuses (10; 10') erstreckt, wobei im Bereich der Entgasungszone (23.3) mehrere die Extruderschnecke (20; 20') umgebende, drehangetriebene Satellitenschnecken (26) vorgesehen sind, die jeweils einzeln um eine Satellitenachse und gemeinsam mit der Extruderschnecke (20; 20') rotieren,

    **dadurch gekennzeichnet,**

    - **dass** im Durchmessermittelbereich wenigstens zwei Entgasungszonen (23.1, 23.3) vorgesehen sind, die jeweils wenigstens eine zugeordnete Absaugöffnung (15.1, 15.2) im Gehäuse (10; 10') aufweisen, wobei eine Entgasungszone (23.3) im Bereich der Satellitenschnecken (26) ausgebildet ist und eine weitere Entgasungszone (23.1) in Strömungsrichtung davor ausgebildet ist und
    - **dass** die Gangtiefe der zwischen den Extruderschneckenstegen (32, 33, 34, 35) ausgebildeten Schneckengänge (42, 43, 44) der Extruderschnecke (20; 20') in beiden Entgasungszonen (23.1, 23.3) größer ist als in wenigstens einem zwischen den Entgasungszonen (23.1, 23.3) ausgebildeten Dicht- und Kompressionsabschnitt (23.2).

2.  Extruder (100; 100') nach Anspruch 1, **dadurch gekennzeichnet, dass** eine Eintragszone zum Einzug fester Kunststoffpartikel und zur Aufschmelzung und Homogenisierung ausgebildet ist und dass sich der zwischen der Extruderschnecke (20; 20') und einer Innenwandung der Gehäuseausnehmung (18) ausgebildete Fließkanal am Ende der Eintragszone unmittelbar vor dem Übergangskonus (22) verjüngt.

3.  Extruder (100; 100') nach Anspruch 1 oder 2, **dadurch gekennzeichnet, dass** sich der zwischen der Extruderschnecke (20; 20') und einer Innenwandung der Gehäuseausnehmung (18) ausgebildete Fließkanal nach dem Übergangskonus (24) in einer Austragszone (25) zunächst erweitert und dann verjüngt.

4.  Extruder (100; 100') nach einem der Ansprüche 1 bis 3, **dadurch gekennzeichnet, dass** in der Mittelzone der Innendurchmesser der Gehäusebohrung (18) und der Außendurchmesser D2 der Extruderschneckenstege (32, 33, 34) größer ist als in der Austragszone.

5.  Extruder (100) nach einem der vorhergehenden Ansprüche, **dadurch gekennzeichnet, dass** in der Mittelzone der Innendurchmesser der Gehäusebohrung (18) und der Außendurchmesser D2 der Extruderschneckenstege (32, 33, 34) größer ist als in der Eintragszone.

6.  Extruder (100') nach einem der vorhergehenden Ansprüche, **dadurch gekennzeichnet, dass** in der Mittelzone der Innendurchmesser der Gehäusebohrung und der Außendurchmesser D2 der Extruderschneckenstege gleich groß wie in der Eintragszone ist.

7.  Extruder (100') nach einem der vorhergehenden Ansprüche, **dadurch gekennzeichnet, dass** die Gangtiefe der zwischen den Extruderschneckenstegen (32, 33, 34, 35) ausgebildeten Schneckengänge (42, 44) der Extruderschnecke (20; 20') in beiden Entgasungszonen (23.1, 23.3) um den Faktor 3 bis 10 größer ist als bei dem Schneckengang (43) in dem zwischen den Entgasungszonen (23.1, 23.3) ausgebildeten Dicht- und Kompressionsabschnitt (23.2).

**Claims**

1. Extruder (100; 100') for the viscosity-increasing preparation of meltable polymers,

   at least comprising a barrel (10; 10') having an inner barrel aperture (18) in which an extruder screw (20; 20') having at least one extruder screw flight (31,32, 33, 34, 35) in the form of a helical coil is rotatably arranged, which extruder screw (20; 20') is divided in terms of its external diameter into a diameter start region, diameter middle region and diameter end region, wherein:

   - the diameter middle region has a greater external diameter D2 than at least one of the other diameter regions;
   - a respective transition cone (22, 24) is formed between regions of different diameter D1, D2 or D3;
   - at least one degassing zone (23.3) is formed in the diameter middle region and has a barrel aperture (18) from which at least one suction-removal opening (15.2) extends to an outer side of the barrel (10; 10'), wherein, in the region of the degassing zone (23.3), a plurality of satellite screws (26) which surround the extruder screw (20; 20'), which are driven in rotation and which each rotate individually about a satellite axis and jointly with the extruder screw (20; 20') are provided,

   **characterized**

   - **in that** at least two degassing zones (23.1, 23.3) are provided in the diameter middle region and each have at least one assigned suction-removal opening (15.1, 15.2) in the barrel (10; 10'), wherein a degassing zone (23.3) is formed in the region of the satellite screws (26) and a further degassing zone (23.1) is formed upstream thereof in a flow direction, and
   - **in that** the channel depth of the screw channels (42, 43, 44) of the extruder screw (20; 20') which are formed between the extruder screw flights (32, 33, 34, 35) is greater in both degassing zones (23.1, 23.3) than in at least one sealing and compression portion (23.2) formed between the degassing zones (23.1, 23.3).

2. Extruder (100; 100') according to Claim 1, **characterized in that** a feed zone for feeding in solid plastics particles and for melting and homogenization is formed, and **in that** the flow channel formed between the extruder screw (20; 20') and an inner wall of the barrel aperture (18) tapers at the end of the feed zone directly upstream of the transition cone (22).

3. Extruder (100; 100') according to Claim 1 or 2, **characterized in that**, downstream of the transition cone (24), the flow channel formed between the extruder screw (20; 20') and an inner wall of the barrel aperture (18) initially widens and then tapers in a discharge zone (25).

4. Extruder (100; 100') according to one of Claims 1 to 3, **characterized in that** the internal diameter of the barrel bore (18) and the external diameter D2 of the extruder screw flights (32, 33, 34) is greater in the middle zone than in the discharge zone.

5. Extruder (100) according to one of the preceding claims, **characterized in that** the internal diameter of the barrel bore (18) and the external diameter D2 of the extruder screw flights (32, 33, 34) is greater in the middle zone than in the feed zone.

6. Extruder (100') according to one of the preceding claims, **characterized in that** the internal diameter of the barrel bore and the external diameter D2 of the extruder screw flights is the same size in the middle zone as in the feed zone.

7. Extruder (100') according to one of the preceding claims, **characterized in that** the channel depth of the screw channels (42, 44) of the extruder screw (20; 20') which are formed between the extruder screw flights (32, 33, 34, 35) is greater in both degassing zones (23.1, 23.3) by a factor of 3 to 10 than in the case of the screw channel (43) in the sealing and compression portion (23.2) formed between the degassing zones (23.1, 23.3).

**EP 3 999 296 B1**

**Revendications**

1. Extrudeuse (100 ; 100') pour un traitement d'augmentation de la viscosité de polymères fusibles, comprenant au moins un boîtier (10 ; 10') avec un évidement intérieur (18) de boîtier, dans lequel une vis d'extrudeuse (20 ; 20') est agencée de manière rotative avec au moins une spire (31, 32, 33, 34, 35) de vis d'extrudeuse de forme hélicoïdale,

   laquelle vis d'extrusion (20 ; 20') se subdivise, en ce qui concerne son diamètre extérieur, en une zone initiale de diamètre, une zone médiane de diamètre et une zone terminale de diamètre, dans lequel :

   - la zone médiane de diamètre présente un diamètre extérieur D2 supérieur à celui d'au moins une des autres zones de diamètre ;
   - un cône de transition (22, 24) est formé entre les zones présentant des diamètres différents D1, D2 ou D3 ;
   - dans la zone médiane de diamètre est formée au moins une zone de dégazage (23.3) qui présente un évidement (18) de boîtier à partir duquel s'étend au moins une ouverture d'aspiration (15.2) vers un côté extérieur du boîtier (10 ; 10'), plusieurs vis satellites (26) entraînées en rotation et entourant la vis d'extrusion (20 ; 20') étant prévues dans la zone de dégazage (23.3), lesquelles tournent chacune individuellement autour d'un axe satellite et conjointement avec la vis d'extrusion (20 ; 20'),

   **caractérisée**

   - **en ce qu'**il est prévu dans la zone médiane du diamètre au moins deux zones de dégazage (23.1, 23.3) qui présentent chacune, dans le boîtier (10 ; 10'), au moins une ouverture d'aspiration (15.1, 15.2) associée, une zone de dégazage (23.3) étant aménagée dans la zone des vis satellites (26) et une zone de dégazage supplémentaire (23.1) étant aménagée en amont dans le sens d'écoulement et
   - **en ce que** la profondeur de pas du pas de vis (42, 43, 44) de la vis d'extrudeuse (20 ; 20') formé entre les spires (32, 33, 34, 35) de vis d'extrudeuse est plus grande dans les deux zones de dégazage (23.1, 23.3) que dans au moins une partie d'étanchéité et de compression (23.2) formée entre les zones de dégazage (23.1, 23.3).

2. Extrudeuse (100 ; 100') selon la revendication 1, **caractérisée en ce qu'**une zone d'introduction est formée pour l'introduction de particules solides de matière plastique et pour la fusion et l'homogénéisation, et **en ce que** le canal d'écoulement formé entre la vis d'extrudeuse (20 ; 20') et une paroi intérieure de l'évidement (18) de boîtier se rétrécit à l'extrémité de la zone d'introduction immédiatement avant le cône de transition (22).

3. Extrudeuse (100 ; 100') selon la revendication 1 ou 2, **caractérisée en ce que** le canal d'écoulement formé entre la vis d'extrudeuse (20 ; 20') et une paroi intérieure de l'évidement (18) de boîtier s'élargit d'abord après le cône de transition (24) dans la zone de décharge (25) et se rétrécit ensuite.

4. Extrudeuse (100 ; 100') selon l'une des revendications 1 à 3, **caractérisée en ce que**, dans la zone médiane, le diamètre intérieur de l'alésage (18) de boîtier et le diamètre extérieur D2 des spires (32, 33, 34) de vis d'extrusion sont plus grands que dans la zone de décharge.

5. Extrudeuse (100) selon l'une des revendications précédentes, **caractérisée en ce que** dans la zone médiane, le diamètre intérieur de l'alésage de boîtier (18) et le diamètre extérieur D2 des spires (32, 33, 34) de vis d'extrudeuse sont plus grands que dans la zone d'introduction.

6. Extrudeuse (100') selon l'une des revendications précédentes, **caractérisée en ce que** dans la zone médiane, le diamètre intérieur de l'alésage de boîtier et le diamètre extérieur D2 des spires de la vis d'extrusion sont identiques à ceux de la zone d'introduction.

7. Extrudeuse (100') selon l'une des revendications précédentes, **caractérisée en ce que** la profondeur de pas du pas de vis (42, 44) de la vis d'extrudeuse (20 ; 20') formé entre les spires (32, 33, 34, 35) de vis d'extrudeuse dans les deux zones de dégazage (23.1, 23.3) est supérieure d'un facteur 3 à 10 à celle du pas de vis (43) dans la partie d'étanchéité et de compression (23.2) formée entre les zones de dégazage (23.1, 23.3).

Fig. 1

Fig. 2A

Fig. 2B

Fig. 3

Fig. 4

EP 3 999 296 B1

Fig. 5

Fig. 6

Fig. 7

EP 3 999 296 B1

**EP 3 999 296 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1434680 B1
- DE 102013003380 B3
- WO 2020108705 A1
- EP 0588008 A1